# EUROPEAN PATENT APPLICATION

(11) **EP 3 671 263 A1**
(43) Date of publication of application: **24.06.2020**
(21) Application number: 19210233.3
(22) Date of filing: 20.11.2019
(51) Int. Cl.: G01S 7/481, G01S 7/497, G01S 17/10, G01S 17/42, G01S 17/931

(54) **OBJECT DETECTOR**

(30) Priority: 18.12.2018 US 201862781135 P; 19.12.2018 US 201816225903
(71) Applicant: Aptiv Technologies Limited, St. Michael (BB)
(72) Inventor: Hao, Chenghui F., Kokomo, IN 46901 (US); Taylor, Ronald M., Greentown, IN 46936 (US); Dietz, Roman J., 10437 Berlin (DE); Samarao, Ashwin K., Sunnyvale, CA 94087 (US); Simopoulos, George N., Noblesville, IN 46060 (US)
(74) Representative: Manitz Finsterwald Patent- und Rechtsanwaltspartnerschaft mbB

(57) **Abstract**

A lidar unit (10) includes a housing (14), a laser (20), a detector (26), a window (30), and a target (36). The housing (14) is configured to define an opening (16). The laser (20) and the detector (26) are disposed within the housing (14). The laser (20) is operable to direct (e.g. scan, steer) a beam (22) of light through the opening (16) toward a field-of-view (24). The detector (26) is operable to detect a reflection (28) of the beam (22) by an object (18) in the field-of-view (24). The window (30) is disposed within the opening (16) of the housing (14), and interposed between the object (18) and the arrangement. The beam (22) is projected by the laser (20) and detected by the detector (26) through the window (30). The target (36) is disposed on the window (30). The target (36) is configured to reflect the beam (22) towards the detector (26). Operation of the laser (20) is determined based on the reflection (28) of the beam (22) by the target (36) towards the detector (26).

## Description

### TECHNICAL FIELD OF INVENTION

This disclosure generally relates to object detection, and more specifically, to light based detection of objects.

### BRIEF DESCRIPTION OF DRAWINGS

The present invention will now be described, by way of example with reference to the accompanying drawings, in which:
Fig. 1 is a diagram and cut away side view of a lidar unit in accordance with one embodiment;
Fig. 2 is a side view of a window of the lidar unit of Fig. 1 in accordance with one embodiment;
Fig. 3 is a front view of the window of the lidar unit of Fig. 1 in accordance with one embodiment;
Fig. 4 is a close up side view of a metal layer of a target of the window of Fig. 2 in accordance with one embodiment;
Fig. 5 is a graph of a detection waveform resulting from scanning the target of Fig. 4 by the lidar unit of Fig. 1; and
Fig. 6 is a method of operating the lidar unit of Fig. 1.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well known methods, procedures, components, circuits, and networks have not been described in detail so as not to unnecessarily obscure aspects of the embodiments.

'One or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

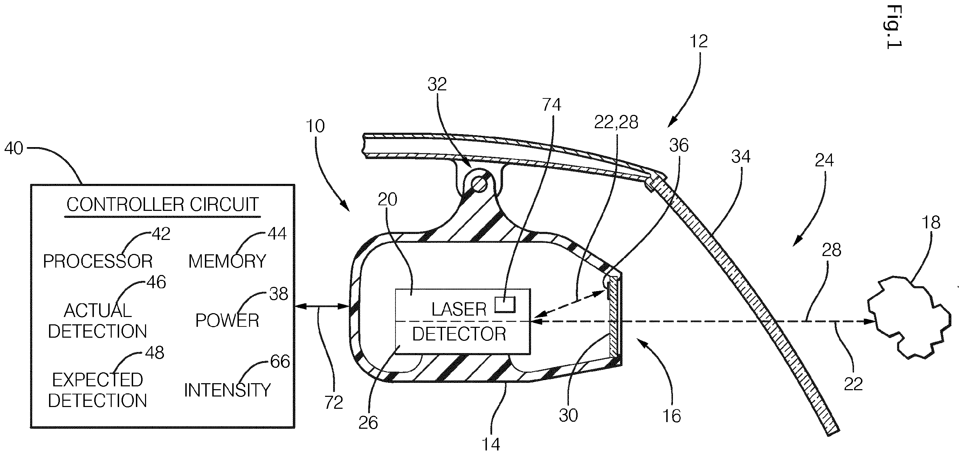

Fig. 1 illustrates a non-limiting example of a lidar unit 10 that may be useful for operating a host vehicle 12. The host vehicle 12 may be characterized as an automated vehicle, and may be referred to by some as an automated mobility on demand (AMOD) type of vehicle. As used herein, the term automated vehicle may apply to instances where the host vehicle 12 is being operated in an automated mode, i.e. a fully autonomous mode, where a human operator (not shown) of the host vehicle 12 may do little more than designate a destination to operate the host vehicle 12. However, full automation is not a requirement. It is contemplated that the teachings presented herein are useful while the host vehicle 12 is operated in a manual mode where the degree or level of automation may be little more than providing an audible or visual warning to the human operator who is generally in control of the steering, accelerator, and brakes of the host vehicle 12. For example, the lidar unit 10 may merely assist the human operator as needed to change lanes and/or avoid interference with and/or a collision with, for example, an object such as another vehicle, a pedestrian, or a road sign.

The lidar unit 10 includes a housing 14 generally configured enclose and protect functional parts of the lidar unit 10, and to define an opening 16 through which those functional parts detect an instance of an object 18 proximate to (e.g. within 100m of) the lidar unit 10 or the host vehicle 12 if the lidar unit 10 is mounted on the host vehicle 12. The functional parts of the lidar unit 10 include a laser 20 disposed within the housing 14. The laser 20 is operable to direct (e.g. scan, steer) a beam 22 of light (i.e. a laser beam) through the opening 16 toward a field-of-view 24 where the object 18 may reside. The lidar unit 10 also includes a detector 26 disposed within the housing 14. The detector 26 is operable to detect a reflection 28 of the beam 22 by an object 18 in the field-of-view 24. From the detected reflection of the beam 22 by the object 18, the lidar unit is able to determine a position of the object 18, e.g. a position relative to the lidar unit 10 which typically includes a distance and direction from the lidar unit 10 to the object 18 as will be recognized by those in the art. The general configuration and cooperative operation of the laser and the detector to operate as a Light Detection and Ranging device (lidar) is well known.

The lidar unit 10 includes a window 30 is disposed within the opening 16 of the housing 14 so the window 30 is interposed between the object 18 and the combination or arrangement of the laser 20 and the detector 26. The window 30 is positioned such that the beam 22 is projected by the laser 20 through the window, and the reflection 28 also passes through the window 30 before being detected by the detector 26. That is, the beam 22 and the reflection 28 both pass through the window 30. The laser 20 is typically configured to emit near infrared light, so the window 30 is preferable formed of a material transparent to near infrared light, a polycarbonate material for example, which may be injection molded. For example, the target 36 may be molded to have a selected shape such as a convex shape that could disperse the beam, or a concave that could focus the shape, or some other shape selected to affect the reflection of the beam 22. Further advantages of injection molding the window 30 will become apparent later in this description.

If the lidar unit 10 is installed in the host vehicle 12 as suggested in Fig. 1, the lidar unit 10 may be mounted on or attached to the host vehicle 12 by way of an adjustable mount 32 so the lidar unit 10 can be aimed toward the field-of-view 24. If the lidar unit 10 is mounted in an interior cabin of the host vehicle 12, the beam 22 and the reflection 28 may also pass through a windshield 34 of the host vehicle 12 in addition to passing through the window 30. The windshield 34 is different from the window 30 as the relative position of the laser 20 and the detector 26 with respect to the windshield 34 is flexible or adjustable, but the relative position of the laser 20 and the detector 26 with respect to the window 30 is ridged or fixed. The reason for this distinction will become apparent later in this description.

The lidar unit 10 includes a target 36 disposed on (i.e. attached to or deposited on) the window 30. The target 36 is configured to reflect at least a portion of the beam 22 towards the detector 26. That is, it may be preferable if some of the beam 22 passed through the target 36 as it could saturate or overload the detector 26 if the target 36 was substantially one hundred percent (100%) reflective. As it is preferable that the position or location of the target 36 is reliably known, the housing 14 and the window 30 advantageously cooperate to rigidly couple the target 36 to the laser 20.

By way of example and not limitation, it has been determined that configuring the target 36 to have a reflectively of ten percent (10%) works well for the purposes described herein. As will be explained in more detail later, the target 36 is particularly useful to determine the power 38 of the beam 22, and verify direction control of the beam 22 emitted by the laser 20. Knowledge of the power 38 and the direction control is desirable to avoid situations where the beam 22 could be injurious to a human eye. The beam 22 may become injurious if the power 38 or irradiance is too great and/or if the direction control has failed so the beam 22 is not being scanned but is being continuously projected in the same direction. Per one industry standard, the laser retina eye safety value is an irradiance limit of less than 10 mW/cm^2.

The lidar unit 10 may include a controller circuit 40 in communication with the laser 20 and the detector 26. The communication may be by way of wires, optical cable, or wireless communication, as will be recognized by those in the art. The controller circuit 40, hereafter sometimes referred to as the controller 40 may include one or more instances of a processor 42 such as one or more instances of a microprocessor or other control circuitry such as analog and/or digital control circuitry including an application specific integrated circuit (ASIC) for processing data as should be evident to those in the art. While the lidar unit 10 described herein is generally described in terms of having a single instance of the controller 40, it is recognized that the functions of the controller 40 may be shared or distributed among several instances of controllers that are each configured for some specific task. While the controller 40 is illustrated as being outside the housing 14, this is only to simplify the illustration as it is contemplated that all or part of the control circuit 40 may be housed within the housing 14. Data or information regarding the distance and/or direction of the object 18 may be output by the controller 40 for use by other systems/devices of the host vehicle 12, as will be recognized by those in the automotive object detection arts.

Hereafter, any reference to the controller 40 being configured for something is to also be interpreted as suggesting that the processor 42 may also be configured for the same thing. It is also recognized that there may be multiple instances of processors in any instance of the controller 40. The controller 40 may include memory 44, i.e. non-transitory computer readable storage medium, including non-volatile memory, such as electrically erasable programmable read only memory (EEPROM) for storing one or more routines, thresholds, and captured data. The memory 44 may be part of the processor 42, or part of the controller 40, or separate from the controller 40 such as remote memory stored in the cloud. The one or more routines may be executed by the controller 40 or the processor 42 to perform steps for determining the power 38 of the beam 22 and/or the status of the direction control of the laser 20 based on signals received by the controller 40 from the detector 26 as described herein.

The controller circuit 40 is configured (e.g. programmed) to operate the laser 20 to direct the beam 22 at the target 36 periodically. Controlling or varying the direction of the beam 22 output by the laser 20 may include operating a scanning-mechanism 74 such as a micro electro mechanical (MEMS) device to vary the angle of a mirror that reflects the beam from a source of the beam 22 towards the target 36. As previously mentioned, the target 36 may not be completely reflective, so may be partially transmissive, which may cause the target 36 to cast a shadow into the field-of-view 24. Operating the laser 20 may also include varying the power 38 of the beam 22.

The controller circuit 40 is also configured (e.g. programmed) to determine if an actual detection 46 by the detector 26 does not correspond to (i.e. the same as, equal, or substantially equal, e.g. within 10% of each other) an expected detection 48 of a reflection of the beam being reflected by the target 36. That is, if the beam 22 is in fact directed at the target 36, the expected detection 48 is expected to have some value of expected brightness, and the actual brightness detected by the detector 26 may indicate something about the operational state of the laser 20. For example, if the actual detection 46 indicated an actual brightness that was substantially greater than the expected brightness, e.g. the expected brightness plus some brightness tolerance, then that may be an indication that the power 38 of the beam 22 emitted by the laser 20 is substantially greater than expected, possibly so bright as to be potentially injurious to a human eye. Alternatively, if the actual detection 46 indicated an actual brightness that was substantially less than the expected brightness, e.g. the expected brightness minus some brightness tolerance, then that may be an indication that the scanning mechanism 74 (e.g. the MEMS) of the laser 20 was not operating, i.e. the beam 22 is not being directed where expected, and may not be moving. This condition could also lead to human eye injury if the beam 22 impinged on a human eye for an extended period of time. That is, while the direction control is operating properly, the duration of the beam 22 impinging on any one thing, e.g. a human eye, is brief enough so as to not be injurious.

The controller circuit 40 can also be configured to use time-of-flight of the reflection to determine if an actual detection 46 by the detector 26 does not correspond to an expected detection 48 of a reflection of the beam 22 being reflected by the target 36. That is, if the beam 22 is in fact directed at the target 36, the expected detection 48 is expected to have some value of time-of-flight under certain threshold, and the location where the reflection with expected time-of-flight is detected by the detector 26 may indicate something about the operational state of the laser 20. For example, if the actual detection 46 indicated that reflection with the expected time-of-flight is missing, or located at a different location than expected, then that may be an indication that the scanning mechanism 74 (e.g. the MEMS) of the laser 20 was not operating, i.e. the beam 22 is not being directed where expected, and may not be moving.

In addition, if the actual detection 46 indicated an actual brightness that was lower than the expected brightness and below the brightness tolerance, then that may be an indication of a degradation in the laser intensity. Ongoing diagnostic information on the laser brightness could be stored in the memory 44 by the processor 42 and continually monitored to determine if laser brightness degradation has occurred or is occurring over lifetime.

In response to a determination that the actual detection 46 does not correspond to the expected detection 48, the operation of laser 20 may be adjusted to, for example, decrease the power 38 if the actual detection 46 suggests that the brightness of the reflection 28 is greater than expected, increase the power 38 if the actual detection 46 suggests that the brightness of the reflection 28 is less than expected, or simply turn off the laser 20 if no reflection is detected at an expected location within the field-of-view 24, which suggests that the direction control of the laser 20 may be inoperable.

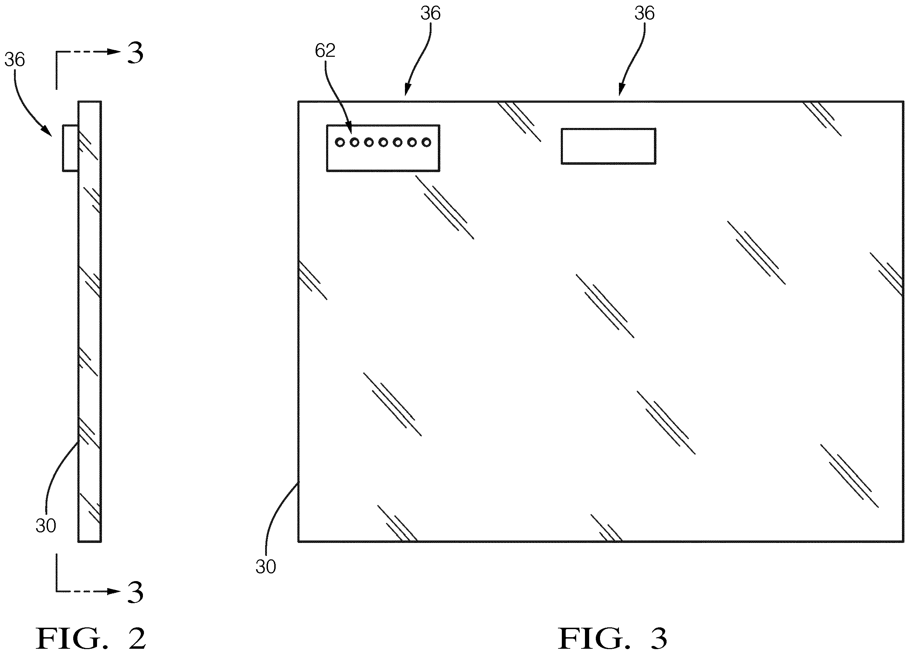

Fig. 2 and Fig. 3 illustrate a non-limiting example of the window 30 with the target 36 deposited thereon. By way of example, the window 30 may be thirty millimeters wide and twenty millimeters high. However, it will be recognized that the size of the window 30 is determined based on the range of deflection angles of the beam 22 from the laser 20 and the distance between the laser 20 and the window 30. Each instance of the target 36 may be deposited on or applied to the window 30 using a variety of techniques. In one embodiment, the position, shape, and other aspects of the target 36 are determined at least in part by an injection molding process used to form the window 30. There may be multiple instances of the target 36 on the window 30 which may be useful to determine if a problem with controlling or varying the direction of the beam 22 is fundamentally a problem with only horizontal deflection or vertical deflection, or if both horizontal deflection or vertical deflection are affected.

Those in the lidar arts will recognize that the deflection angle is varied and the beam 22 is pulsed so that the field-of-view 24 is periodically illuminated with numerous dots of light so a point cloud can be determined based on the distance each of the pulses travels before it is reflected by, for example, one or more instances of the object 18 or the target 36. The overall size of the target 36 may be selected so that, based in the angular resolution of the lidar unit 10, there are multiple reflections from the target that are detected by the detector 26. That is, the size of the target 36 may be such that the target 36 is illuminated my multiple pulses of the beam 22, i.e. corresponds to multiple pixels of the lidar unit 10. By way of a non-limiting example, the width of the target 36 may correspond to a side by side arrangement of one hundred fifty pixels arranged in a line. By having the size of the target encompass many pixels, statistics of the reflections can be calculated to better determine, for example, the power 38 of the beam 22.

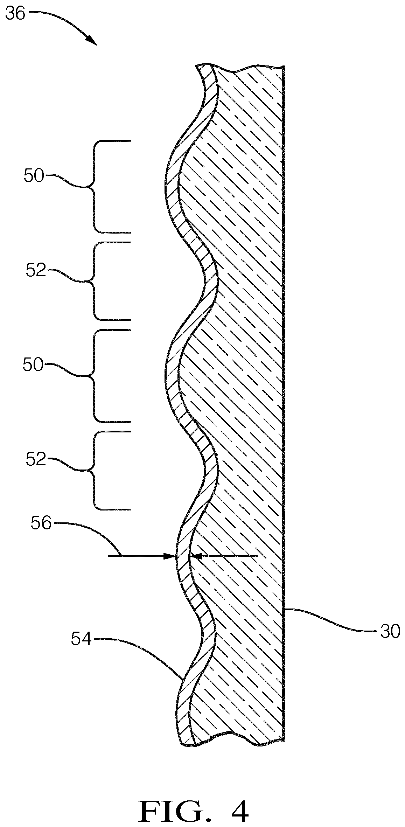

Fig. 4 shows a non-limiting example of a portion of the target 36. The target 36 in this example includes a plurality of convex portions 50 and a plurality of concave portions 52 arranged in an alternating pattern. As shown, the cross section view of the alternating instances of convex portions 50 and concave portions 52 create a sinusoidal shape. To make the target 36 in this example reflective, the target 36 includes a metal layer 54 deposited on the target 36. The metal layer 54 may consist of or include metals such as, but not limited to gold, copper, silver, nickel, aluminum, and/or alloys thereof. The metal may be deposited to a thickness effective for the target to have some desired reflectivity characteristic, ten percent reflective for example. Aluminum may be preferable for cost reasons, and a thickness 56 of about one hundred nanometers would likely be effective to provide for about ten percent reflectivity. That is ten percent of the power 38 of the beam 22 would be reflected by the target 36, some of which would be directed toward the detector 26, and about ninety percent of the beam 22 would pass through the target 36 into the field-of-view 24.

Targets with different reflectance (translucence) can be used to compare intensity of return and profile. Targets with different mirror shapes (concave and convex) can be used to compare the intensity of return power (either relative or maximum for eye safety limit). Concave shape reflector focuses reflected intensity; convex reflector shape reflector reduces return intensity. By use of same reflector shape but with opposites direction allows a high-fidelity comparison of reflected lidar pixel signal. Size and shape of reflectors are based on the lidar pixel resolution size and field per pixel element. In one example embodiment, a lidar unit with system focal length of 30 mm and pixel resolution of 0.25° would have a reflector segment radius of curvature of approximately 60 mm. Segment width would be dependent upon distance of the target and the angular resolution. For example, for a target located of 30 mm from the MEMs mirror, a suitable segment width would be approximately 0.13 mm.

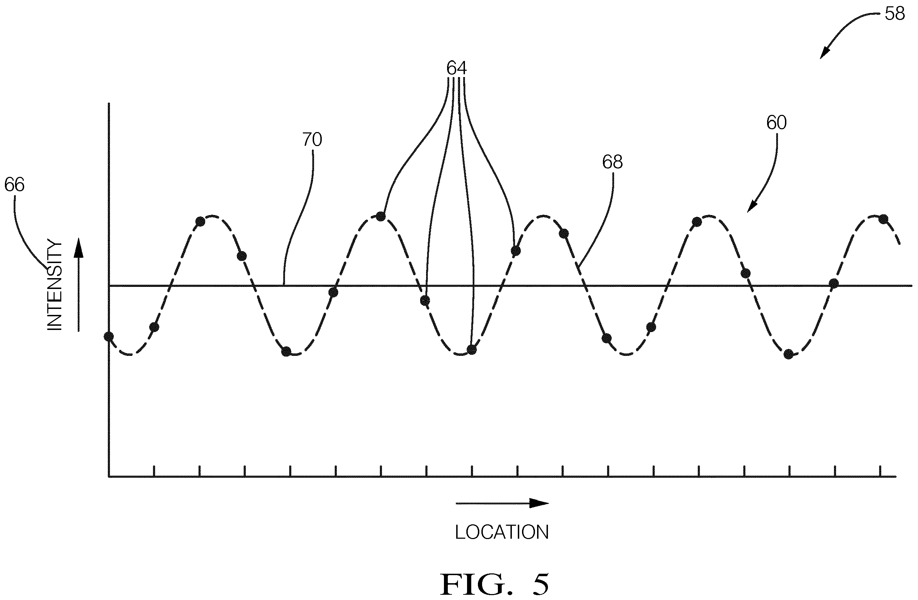

Fig. 5 is a graph 58 that illustrates a non-limiting example of a detection waveform 60 arising from the beam 22 being scanned across the target 36 and impinging on the target 36 at the plurality of locations 62 (Fig. 3) on the target 36. Each data point 64 indicates an intensity 66 of the reflection 28 at each of the locations 62 where the laser 20 was pulsed to momentarily generate the beam 22. The dashed line illustrates a presumed waveform 68 that could arise if the beam 22 were on continuously while scanned across the target 36. The intensity 66 of each instance of data point 64 may be tabulated or stored, and then statistical analysis may be used to determine, for example, an average 70 of the intensity 66. The average 70 may be transformed or translated into a value indicative of the power 38 of the beam 22 by multiplying the average 70 by a calibrated coefficient determined by, for example, empirical testing. That is, the controller circuit 40 may be configured to determine a power 38 of the beam 22 in accordance with a detection waveform 60 by detecting a plurality of reflections 28 from a plurality of locations 62 on the target 36. This practice of providing the alternating pattern of a plurality of convex portions 50 and a plurality of concave portions 52, and then scanning across that arrangement allow for an accurate determination of the power 38 without relying on a precise alignment of the beam 22 to, for example, a specific concave portion. That is, what might seem like a random reflectivity characteristic for each individual instance of the location 62 gets filtered by, for example, determining an average of the intensity 66 of the data points 64.

When lidar beam steering control is operating correctly, the value of the intensity 66 of each instance of data point 64 would be present at expected location in the point cloud data plane. So, dislocation of the intensities, such as intensity patterns being spread out than expected, would indicate beam steering error. When the beam steering control of a lidar is operating correctly, the intensity 66 of each instance of data point 64 is expected to occur at expected time. That is, an instance of an intensity value not occurring at expected time would indicate beam steering error.

Also, described herein is a lidar unit 10 that includes a laser 20 operable to direct a beam 22 of light; a detector 26 operable to detect a reflection 28 of the beam 22; a target 36 configured to reflect the beam 22 towards the detector 26; and a controller circuit 40 (or a processor 42) in communication with the laser 20 and the detector 26. An actual detection 46 of the reflection 28 by the detector 26 may be indicative of a power 38 of the beam 22. The controller circuit 40 is configured to determine if the actual detection 46 by the detector 26 does not correspond to an expected detection 48 of the beam 22 being reflected by the target 36. For example, if the power 38 indicated by the actual detection 46 greater than or less than (including zero power) what is expected. In response to a determination that the actual detection 46 does not correspond to the expected detection 48, the controller circuit 40 is configured to adjust the operation of the laser 20. For example, the controller 40 may change or adjust a control signal 72 sent to the laser 20 to reduce the power 38 of the beam, or simply turn off the laser 20.

The target 36 is deposited on a window of the lidar unit 10, and the window 30 is rigidly coupled to the laser 20. The ridged coupling of the window 30 to the laser 20 may be by way of a housing 14 that protects the laser 20 and other devices in the lidar unit 10, or may be some sort of framework (not shown) that does not necessarily provide protection. The lidar unit 10 may be mounted in a host vehicle12 via an adjustable mount 32 so the lidar unit 10 can be aimed with respect to the host vehicle 12 during installation of the lidar unit 10 into the host vehicle 12. The laser 20 is often positioned in the host vehicle 12 such that the beam 22 and the reflection 28 pass through the window 30 and a windshield 34 of the host vehicle 12. Because the target 36 is used to check or diagnose the operation of the lidar unit 10, e.g. check the power 38 of the laser 20, it would be problematic to have the target 36 installed or applied to the windshield 34 as the reflectivity characteristic of an instance of the target 36 on the windshield 34 is not expected to be as easily guaranteed or controlled as is the case where the target 36 is applied to the window 30.

Having the target 36 on the window 30 rather than the windshield 34 is further advantageous because the calibration of the lidar unit 10 to compensate for variation in the reflectivity characteristic of the target 36 can be performed during the manufacture of the lidar unit 10 itself rather than waiting until the lidar unit 10 is installed in the host vehicle 12 during vehicle assembly. Also, because the target 36 is used to check or diagnose the operation of a scanning mechanism 74 of the lidar unit 10, e.g. check for relative location of the expected detection 48 of the target 36 within the field-of-view 24, it would be problematic to have the target 36 installed or applied to the windshield 34 as the relationship between windshield 34 and lidar unit 10 is not rigid so a target on windshield 34 may not always be fixed at a known location to serve as expected detection.

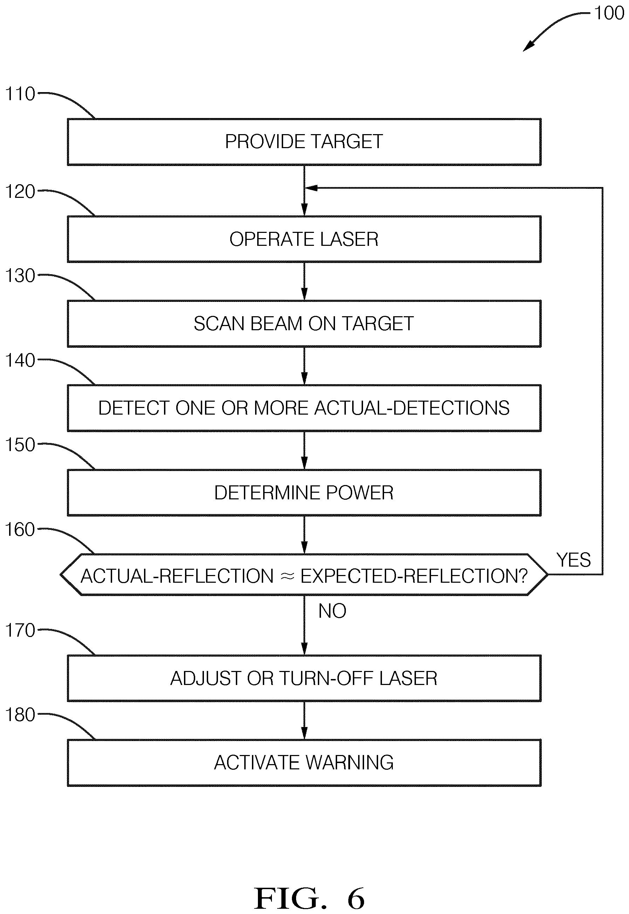

Fig. 6 illustrates a non-limiting example of a method 100 of operating a lidar unit 10.

Step 110, PROVIDE TARGET, may include installing a window 30 that is equipped with one or more instances of a target 36 already applied to the window 30. The window 30 may be formed of a molded polymeric compound, and the shape or texture of the target 36 may be formed during molding. The target 36 may also include a metal layer 54 deposited over the area of the target 36, where the thickness 56 of the metal layer is selected so the target 36 has a desired light reflectivity/transmissivity characteristic. Alternatively, the target 36 may be a prefabricated part that is applied to the window 30, i.e. stuck on the window 30 like a decal.

Step 120, OPERATE LASER, may include pulsing or cycling a source of light that is focused into a beam 22 that is directed toward or scanned about a field-of-view 24 of the lidar unit 10. The scanning is expected to not be directed at the target 36 most of the time as the lidar unit 10 is primarily tasked with detecting an instance of an object 18 in the field-of-view 24. It is expected that the beam 22 will be directed at the target 36 on a periodic basis to verify that the lidar unit 10 is functioning as expected, as least regarding the steering or scanning the beam 22 by the scanning mechanism 74.

Step 130, SCAN BEAM ON TARGET, may include operating the laser 20 to direct the beam 22 onto the target 36 so that the functionality of the lidar unit can be diagnosed or checked.

Step 140, DETECT ONE OR MORE ACTUAL DETECTIONS, may include recording signals from the detector 26 while the laser 20 is being operated in a manner that should direct the beam at the target 36, presuming that the laser 20 is operating properly. The actual detections 46 may be characterized in terms of the intensity 66 (i.e. brightness of the laser 20) of the reflection 28 from the target 36.

Step 150, DETERMINE POWER, may include processing or analyzing the actual detections 46 to determine or estimate the power 38 of the beam 22. This processing may include multiplying an average 70 of data points 64 associated with the actual detections 46 by a coefficient or translation value to convert the average 70 into a value indicative of the power 38 of the beam 22. This step may also perform a time-of-flight measurement, which includes measuring the time-of-flight of the reflection 28.

Step 160, ACTUAL DETECTION ≈ EXPECTED DETECTION?, may include comparing the value of the average 70 or the power 38 to what either of those values is expected to be, possibly plus or minus some tolerance or threshold value so that it is determined if the average 70 or the power 38 are within a range of values near the expected detection 48. If the answer is YES, the lidar unit 10 may continue to operate. However, if answer is NO because the actual detection 46 does not correspond to the expected detection 48, either because the actual detection 46 is substantially greater than the expected detection 48, e.g. greater than 115% of the expected detection 48, or is substantially less than the expected detection 48, e.g. less than 85% of the expected detection 48, then some remedial action may be taken in step 170. Alternatively, this step may also include comparing the value of the time-of-flight against a time-of-flight threshold.

Step 170, ADJUST OR TURN OFF LASER, may include changing or altering the control signal 72 to reduce the power 38 of the beam 22 if the actual detection 46 is substantially greater than the expected detection 48. Alternatively, step 170 may include changing or altering the control signal 72 to increase the power 38 of the beam 22 if the actual detection 46 is substantially less than the expected detection 48, but also substantially greater than zero, e.g. greater than 25% of the expected detection 48. However, if the actual detection 46 is near zero, e.g. less than 25% of the expected detection 48, or if reflections with expected time-of-flight is not present in the expected location, then that may be an indication that the deflection feature of the laser 20 is not working and the beam 22 may not be scanning. Such a situation could result in the beam 22 exceeding a safety threshold because of high duration on a single point rather that the output of the laser being too great. In this situation, it may be preferable to simply turn off the laser 20.

Step 180, ACTIVATE WARNING, may include the controller 40 including in a data output stream (not shown) from the lidar unit 10 a message that the lidar unit 10 is not functioning properly, and should be serviced or replaced.

Also described herein is a non-tangible computer readable storage medium 44 that stores instructions 110-180 configured to cause a processing device 40 to: operate a laser 20 to emit a beam 22 of light; detect, via a detector 26, a reflection 28 of the beam 22 of light; determine if an actual detection 46 by the detector 26 does not correspond to an expected detection 48 of the beam 22 being reflected by the target 36; and in response to a determination that the actual detection 46 does not correspond to the expected detection 48, adjust operation of the laser 20.

Accordingly, a lidar unit 10, a controller 40 for the lidar unit 10, and a method 100 of operating the lidar unit 10 are provided. The lidar unit 10 includes or is equipped with the means to diagnose when the laser 20 is emitting a beam 22 that is too bright or not as bright as it should be, and/or detect when a deflection function of the laser 20 is not operating as expected.

While this invention has been described in terms of the preferred embodiments thereof, it is not intended to be so limited, but rather only to the extent set forth in the claims that follow.

## Claims

1. A lidar unit (10), comprising:
a laser (20) that directs a beam (22) of light towards a target (36);
a detector (26) that detects a reflection (28) of the beam (22); and
a controller circuit (40) in communication with the laser (20) and the detector (26), said controller circuit (40) configured to determine if an actual detection (46) by the detector (26) does not correspond to an expected detection (48) of the beam (22) being reflected by the target (36); and in response to a determination that the actual detection (46) does not correspond to the expected detection (48), adjust the laser (20) in accordance with the actual detection (46).

2. The lidar unit (10) in accordance with claim 1, wherein the actual detection (46) is output by the detector (26) in response to the reflection (28) being detected by the detector (26), the expected detection (48) is what is expected to be output by the detector (26) in response to the beam (22) being reflected by the target (36), and the actual detection (46) corresponds to the expected detection (48) if the actual detection (46) is substantially equal to the expected detection (48).

3. The lidar unit (10) in accordance with any of the previous claims, wherein the lidar
unit (10) further comprises
a housing (14) configured to define an opening (16), said laser (20) and said detector (26) disposed within the housing (14);
a window (30) disposed within the opening (16) of the housing (14) so the beam (22) and the reflection (28) pass through the window (30), said target (36) disposed on the window (30), said target (36) configured to reflect the beam (22) towards the detector (26), said housing (14) and said window (30) cooperate to rigidly couple the target (36) to the laser (20).

4. The lidar unit (10) in accordance with any of the previous claims, wherein the lidar unit (10) is mounted in a host vehicle (12) such that the beam (22) and the reflection (28) pass through a windshield (34) of the host vehicle (12).

5. The lidar unit (10) in accordance with any of the previous claims, wherein the controller circuit (40) is configured to, in response to a determination that the actual detection (46) does not correspond to the expected detection (48), turn off the laser (20).

6. The lidar unit (10) in accordance with any of the previous claims, wherein the target (36) includes a plurality of convex portions (50) and a plurality of concave portions (52) arranged in an alternating pattern.

7. The lidar unit (10) in accordance with claim 6, wherein the controller circuit (40) is configured to determine a power (38) of the beam (22) in accordance with a detection waveform (60) that is in respond to detecting a plurality of reflections (28) arising from the beam (22) impinging on the target (36) at the plurality of locations (62).

8. The lidar unit (10) in accordance with any of the previous claims, wherein the target (36) includes a metal layer (54) deposited on the target (36), said metal layer (54) deposited to a thickness (56) effective for the target (36) to be ten percent (10) reflective.

9. The lidar unit (10) in accordance with any of the previous claims, wherein the lidar unit (10) includes a target (36) configured to reflect the beam (22) towards the detector (26).

10. The lidar unit (10) in accordance with claim 9, wherein
the laser (20) also directs the beam (22) of light towards an object (18) a field-of-view (24) of the lidar-unit;
the detector (26) that detects the reflection (28) of the beam (22) reflected by the object (18); and
the controller (40) is configured to determine a position of the object (18) based on the reflection (28) of the beam (22) reflected by the object (18), said object (18) different from said target (36).

11. A method (100) of operating a lidar unit (10), said method (100) comprising:
operating a laser (20) to emit a beam (22) of light at a target (36);
detecting, by a detector (26), an actual detection (46) of the beam (22);
determining if the actual detection (46) corresponds to an expected detection (48) indicative of the beam (22) being reflected by the target (36); and
in response to a determination that the actual detection (46) does not correspond to the expected detection (48), adjusting operation of the laser (20).

12. The method (100) in accordance with claim 11, wherein adjusting the operation of the laser (20) includes one of turning off the laser (20), reducing a power (38) of the beam (22), increasing the power (38) of the beam (22).

13. The method (100) in accordance with any of the previous claims, wherein the
method (100) includes
scanning the beam (22) to impinge on the target (36) at the plurality of locations (62); and determining a power (38) of the beam (22) in accordance with a detection waveform (60) by detecting a plurality of actual detections (46) arising from the beam (22) impinging on the target (36) at the plurality of locations (62).

14. The method (100) in accordance with any of the previous claims, wherein the actual detection (46) is output by the detector (26) in response to the reflection (28) being detected by the detector (26), the expected detection (48) is what is expected to be output by the detector (26) in response to the beam (22) being reflected by the target (36), and the actual detection (46) corresponds to the expected detection (48) if the actual detection (46) is substantially equal to the expected detection (48).

15. A non-tangible computer readable storage medium (44) that stores instructions (110) configured to cause a processing device (40) to:
operate a laser (20) to emit a beam (22) of light;
detect, via a detector (26), a reflection (28) of the beam (22) of light;
determine if an actual detection (46) by the detector (26) does not correspond to an expected detection (48) of the beam (22) being reflected by a target (36); and
in response to a determination that the actual detection (46) does not correspond to the expected detection (48), adjust operation of the laser (20).
